# DEMANDE DE BREVET EUROPEEN

(11) **EP 4 238 778 A1**
(43) Date de publication de la demande: **06.09.2023**
(21) Numéro de dépôt: 22305233.3
(22) Date de dépôt: 01.03.2022
(51) Int. Cl.: B60B 3/16, B60B 27/00, G07C 5/00

(54) **DISPOSITIF DE SÉCURITÉ CONNECTÉ POUR ROUE DE VÉHICULE ET SYSTÈME DE SURVEILLANCE GLOBALE COMPRENANT UN TEL DISPOSITIF**

(71) Demandeur: De Lima, Jean Bernard, 33600 Pessac (FR)
(72) Inventeur: De Lima, Jean Bernard, 33600 Pessac (FR)
(74) Mandataire: Ipside

(57) **Abrégé**

L'invention porte sur un dispositif de sécurité connecté (100) destiné à être monté sur une roue (200) d'un véhicule (300), notamment de transport routier, pour empêcher le desserrage des éléments de fixation (221, 222) reliant la roue à un moyeu, ledit dispositif comportant des moyens de blocage en rotation (20) pour condamner la rotation de tout ou partie desdits éléments de fixation autour de leurs axes respectifs, des moyens de verrouillage (40) pour se solidariser à ladite roue, au moins un capteur physique (51, 52), un module de communication sans-fil couplé à une antenne (53) pour transmettre sur un réseau sans-fil des données issues de chaque capteur physique et un dispositif d'alimentation électrique (54).

L'invention porte également sur un système de surveillance globale comprenant un tel dispositif de sécurité.

## Description

### DOMAINE TECHNIQUE

La présente invention appartient au domaine général de la sécurité routière, notamment des équipements de sécurité pour roue de véhicule, et concerne plus particulièrement un dispositif de sécurité connecté, du type bloqueur d'écrous pour éviter la perte de roues, et un système de surveillance comprenant un tel dispositif pour détecter des anomalies et prévenir les accidents directement liés à ces anomalies.

La présente invention trouve une application directe, mais non exclusive, dans les véhicules poids lourds tels que les tracteurs routiers.

### ÉTAT DE L'ART

La sécurité routière a toujours été un enjeu majeur depuis la généralisation des transports routiers. Malgré les avancées considérables visant à augmenter la sécurité intrinsèque des véhicules, les accidents de la route causés par les défaillances techniques restent malheureusement fréquents et impliquent toutes sortes de véhicules.

Les bilans d'accidentologie montrent que les facteurs de risque liés aux accidents, mis à part les facteurs humains (fatigue, ébriété, etc.) et environnementaux (conditions météorologiques, état des chaussées, etc.), sont différents selon les classes de véhicules (véhicules légers, intermédiaires, poids lourds, etc.). En particulier, le poids d'un véhicule peut avoir un effet amplificateur dans la plupart des accidents et augmenter ainsi leur gravité tant sur le plan humain que matériel. Dans le cas des véhicules poids lourds, typiquement les camions, l'un des principaux facteurs de risque est le desserrage des éléments de fixation des roues sur les moyeux, qui peut occasionner la désolidarisation d'une roue de son essieu (perte de roue) et donc un accident grave mettant en danger le conducteur du véhicule lui-même ainsi que des usagers de la route se trouvant à proximité.

En règle générale, chaque roue est montée sur un moyeu avec des éléments de fixation tels que des vis, des goujons et des écrous qui doivent être serrés à une tension de serrage prédéfinie par le constructeur. Cette tension de serrage a naturellement tendance à se relâcher avec le temps pour différentes raisons, principalement le mouvement des roues, surtout sur des surfaces irrégulières. Plus cette tension de serrage diminue plus les vibrations et les chocs subis par la roue précipitent le desserrage des éléments de fixation jusqu'à causer la désolidarisation totale de la roue.

Le desserrage d'un écrou de roue peut avoir plusieurs causes : des routes en mauvais état, les vibrations, une mauvaise technique de serrage et/ou l'utilisation d'un outil défectueux, un relâchement de l'assemblage roue - moyeu, le freinage et l'accélération du véhicule, une erreur humaine lors du montage de la roue, les cycles de dilatations et de contractions thermiques des fixations, un mauvais équilibrage des roues et/ou une mauvaise pression des pneumatiques, diverses projections de matières (huile, carburant, etc.) sur des fixations non protégées, etc. Il convient de noter que ce problème de desserrage des écrous de roues dans les véhicules poids lourds est bien connu et constitue une préoccupation permanente des chauffeurs, d'où l'exigence d'un contrôle régulier des roues et, le cas échéant, la nécessité d'un resserrage des écrous desserrés à la tension préconisée à l'aide d'une clé dynamométrique. Or, au vu du nombre important d'écrous par véhicule, surtout pour les poids lourds à plusieurs essieux, le contrôle des écrous peut rapidement devenir une tâche fastidieuse et chronophage.

Pour cette raison, des dispositifs de sécurité destinés à être installés directement sur les écrous sont apparus. Ces dispositifs peuvent être de simples indicateurs de desserrage qui permettent de cibler les écrous à resserrer et d'éviter ainsi un contrôle global, ou des bloqueurs d'écrous qui permettent quant à eux de bloquer le desserrage des écrous en limitant ou en empêchant leur rotation propre.

Ces dispositifs de sécurité existent sous différentes formes. Quelques exemples sont décrits dans les documents EP1981721 et EP2605921, qui sont au nom du Demandeur.

Les solutions connues permettent toutes, de façon plus ou moins efficace, de bloquer le desserrage des écrous pour éviter une perte de roue, mais en aucun cas ne permettent d'alerter le conducteur sur des signes précurseurs survenant avant le desserrage, afin qu'il puisse agir et prévenir l'occurrence de situations accidentogènes. Les signes précurseurs correspondent par exemple à une élévation anormale de la température des écrous ou à un niveau anormal de vibrations dans la roue.

Certaines solutions de l'art antérieur intègrent des indicateurs visuels de température au niveau des écrous. C'est par exemple le cas de la solution décrite dans le document EP2605921 précité, dans laquelle une peinture thermochromique peut être appliquée aux capuchons positionnés en regard des écrous, de sorte à indiquer grâce à un changement de couleur visible à l'œil nu toute élévation de température au-delà d'un certain seuil.

Toutefois, en obligeant le conducteur à descendre de sa cabine pour inspecter les roues, cette solution ne permet aucune alerte en temps réel qui puisse parvenir au conducteur même lorsqu'il est en train de conduire son véhicule.

Par conséquent, il existe un réel besoin de connecter ce genre de dispositifs de sécurité à la cabine du véhicule pour permettre une surveillance en temps réel de l'état des roues, qui éviterait par exemple aux chauffeurs routiers, dont la mission est souvent compliquée, de perdre beaucoup de temps dans l'inspection de leurs véhicules.

Il convient de noter qu'il est connu d'équiper une roue de véhicule de capteurs, notamment de capteurs de pression placés à l'intérieur du pneumatique pour surveiller la pression de gonflage. Néanmoins, de telles solutions ne permettent pas de prévenir la perte de roue due au desserrage des écrous et restent très éloignées de la présente invention.

### PRÉSENTATION DE L'INVENTION

La présente invention vise à pallier les inconvénients de l'état de l'art exposés ci-avant et propose une solution particulièrement innovante pour équiper les roues d'un véhicule avec un dispositif de sécurité connecté communiquant en temps réel avec le conducteur de sorte à prévenir les accidents que peuvent causer certaines défaillances mécaniques au niveau des roues.

À cet effet, la présente invention a pour objet un dispositif de sécurité destiné à être monté sur une roue d'un véhicule, notamment de transport routier, pour empêcher le desserrage des éléments de fixation reliant la roue à un moyeu, ledit dispositif comportant des moyens de blocage en rotation pour condamner la rotation de tout ou partie desdits éléments de fixation autour de leurs axes respectifs, et des moyens de verrouillage pour se solidariser à ladite roue, remarquable en ce qu'il comporte au moins un capteur physique, un module de communication sans-fil couplé à une antenne pour transmettre sur un réseau adapté des données issues de chaque capteur physique et un dispositif d'alimentation électrique.

Ce dispositif de sécurité connecté dispose donc de façon autonome des moyens électroniques nécessaires pour opérer régulièrement ou en continu une inspection de l'état de la roue sur laquelle il est installé.

Selon un mode de réalisation avantageux, le dispositif de sécurité comporte au moins un capteur de température tel qu'une thermistance, pour mesurer la température au niveau des éléments de fixation de la roue, et au moins un capteur de vibration tel qu'un accéléromètre pour détecter des anomalies dans le mouvement de ladite roue.

En effet, le desserrage des éléments de fixation d'une roue se manifeste systématiquement par des variations anormales de la température et de la vibration de la roue, et plus précisément de la jante. Au vu de son installation sur la jante, le dispositif de sécurité constitue dès lors une solution idéale pour surveiller le desserrage des éléments de fixation.

Selon une architecture électronique particulièrement compacte, le dispositif de sécurité comporte une carte électronique principale intégrant le module de communication sans-fil et disposant de moyens de traitement et calcul, sous forme de microcontrôleur, reliés à chaque capteur physique, à l'antenne et au dispositif d'alimentation électrique.

Pour des raisons esthétiques mais également fonctionnelles, chaque capteur physique, le module de communication sans-fil et son antenne, ainsi que le dispositif d'alimentation électrique, sont placés sur une face arrière du dispositif de sécurité pour qu'ils ne soient pas visibles lorsque ce dernier est monté sur la roue et qu'ils soient protégés contre les intempéries.

Selon un mode de réalisation avantageux, le dispositif de sécurité comporte en outre des témoins de surchauffe amovibles, fabriqués dans un matériau thermochromique, destinés à venir au contact des éléments de fixation de la roue pour indiquer par un changement de couleur toute élévation de température au-delà d'un certain seuil.

La présente invention a également pour objet un système de surveillance de l'état d'une roue d'un véhicule, comprenant, monté sur ladite roue, un dispositif de sécurité tel que présenté, et au moins un terminal fixe ou mobile permettant à un utilisateur, notamment le conducteur du véhicule, d'accéder à des informations transmises par ledit dispositif de sécurité.

Le système de surveillance peut en outre comprendre un ou plusieurs relais convenablement placés dans le véhicule afin d'améliorer la connectivité entre le dispositif de sécurité et le terminal qui sera généralement placé en cabine.

Selon un mode de réalisation, le système de surveillance comprend une plateforme numérique de traitement et de calcul pouvant être embarquée dans le véhicule ou à distance, notamment sous forme de cloud.

De façon avantageuse, le dispositif de sécurité et le terminal sont aptes à communiquer sur un réseau sans-fil adapté à l'internet des objets IoT (*Internet of Things).*

Enfin, la présente invention concerne également un véhicule de transport routier, du type poids lourd, comprenant un système de surveillance tel que présenté, dans lequel chaque roue est équipée d'un dispositif de sécurité.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un dispositif de sécurité connecté pour roue de véhicule et d'un système de surveillance associé, conformes aux principes de l'invention.

### BRÈVE DESCRIPTION DES FIGURES

Les figures sont données à titre purement illustratif pour une meilleure compréhension de l'invention sans en limiter la portée. Les différents éléments sont représentés de manière schématique et ne sont pas nécessairement à l'échelle. Sur l'ensemble des figures, les éléments identiques ou équivalents portent la même référence numérique.

Il est ainsi illustré en :
- Figure 1 : un véhicule dont les roues sont équipées de dispositifs de sécurité selon l'invention ;
- Figure 2 : une roue de véhicule équipée d'un dispositif de sécurité ;
- Figure 3 : une vue de face partielle du dispositif de sécurité installé sur la roue, avec le détail d'un moyen de blocage autour d'un élément de fixation de la roue ;
- Figure 4a : une vue de face du dispositif de sécurité montrant le changement de couleur d'un témoin de surchauffe ;
- Figure 4b : une vue arrière partielle du dispositif de sécurité avec les goujons du moyeu ;
- Figure 5a : une vue en perspective avant d'un témoin de surchauffe selon l'invention ;
- Figure 5b : une vue en perspective arrière du témoin de surchauffe ;
- Figure 6 : un schéma du dispositif de sécurité avec ses capteurs et composants électroniques intégrés ;
- Figure 7 : une architecture électronique du dispositif de sécurité ;
- Figure 8 : un schéma d'un système de surveillance mettant en œuvre les dispositifs de sécurité selon l'invention ;
- Figure 9 : un organigramme des principales étapes d'un procédé de surveillance mettant en œuvre un système de surveillance selon l'invention ;
- Figure 10 : un exemple de tableau de bord affiché sur le terminal du conducteur ;
- Figure 11 : un exemple de fenêtre de mesure affichant la variation de température ;
- Figure 12 : un exemple d'emplacement d'un terminal fixe dans la cabine du véhicule.

### DESCRIPTION DÉTAILLÉE DE MODES DE RÉALISATION

Il convient de noter que certains éléments techniques bien connus de l'homme du métier sont ici rappelés pour éviter toute insuffisance ou ambiguïté dans la compréhension de la présente description.

Dans le mode de réalisation décrit ci-après, on fait référence à un dispositif de sécurité connecté pour roue de véhicule, destiné principalement à un véhicule poids lourd pour surveiller l'état de chacune de ses roues et prévenir sa désolidarisation de l'essieu. Cet exemple, non limitatif, est donné pour une meilleure compréhension de l'invention et n'exclut pas l'utilisation dudit dispositif sur un véhicule d'un autre type (bus, cars, certains véhicules de carrières et de mines et d'autres véhicules industriels), du moment qu'il s'agit d'un véhicule à roues dans lequel chaque roue est montée sur un essieu par des éléments de fixation susceptibles de se desserrer. Dans la présente description, un objet est dit « connecté » lorsqu'il est équipé de moyens aptes à communiquer, de façon autonome, avec d'autres objets connectés sur un réseau sans-fil.

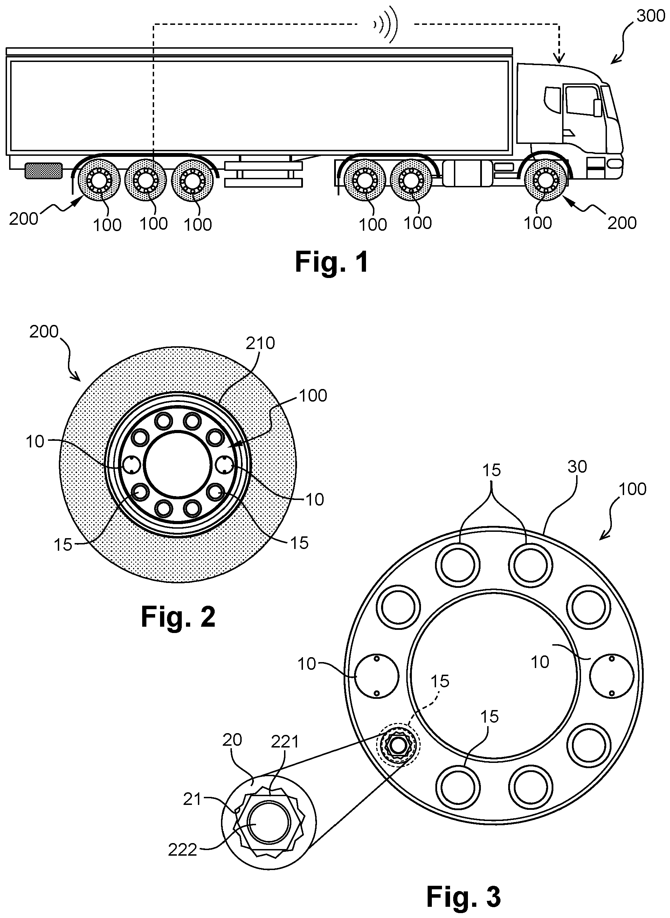

La figure 1 représente des dispositifs de sécurité connectés 100, montés chacun sur une roue 200 d'un véhicule 300 qui, selon l'exemple illustré, est du type tracteur routier articulé à une remorque. Chaque dispositif de sécurité 100 est équipé de capteurs et apte à communiquer sans-fil avec la cabine du véhicule 300 pour informer le conducteur en temps réel de l'état de la roue 200 sur laquelle il est installé.

Selon le mode de réalisation illustré, le dispositif de sécurité connecté 100 est obtenu en intégrant une électronique fonctionnelle (capteurs, alimentation et moyens de communication sans-fil) à un dispositif de sécurité connu, notamment celui décrit dans le document EP2605921 au nom du Demandeur et commercialisé sous la marque déposée Sécuriveur^{®}.

Par rapport au dispositif de sécurité susmentionné, le dispositif de sécurité connecté 100 ne présente pas de différences majeures de structure ou de montage sur la roue, de sorte qu'aucun rappel détaillé ne sera fait dans la présente description. Néanmoins, un bref aperçu s'avère nécessaire pour la suite.

En référence à la figure 2, le dispositif de sécurité 100 se fixe de façon connue sur la jante 210 de la roue 200 pour venir bloquer en rotation les éléments de fixation reliant ladite roue au moyeu. Le dispositif de sécurité 100 comprend des capuchons 10 et 15 répartis circulairement de sorte à venir en regard des éléments de fixation pour les dissimuler, tel un enjoliveur classique.

La figure 3 représente le dispositif de sécurité 100 monté sur la roue, sans la jante ni le pneumatique, sur lequel un capuchon 15 a été mis en transparence pour rendre visible l'élément de fixation bloqué en rotation. En effet, derrière chaque capuchon 10 et 15 se trouve un élément de fixation de la roue, en l'occurrence un boulon classique constitué d'un écrou 221 vissé sur un goujon 222 solidaire du moyeu, qui est bloqué en rotation par un moyen de blocage 20 du dispositif de sécurité 100, ledit moyen de blocage étant conformé pour bloquer la rotation de l'écrou 221 autour de son axe de serrage et comporte à cet effet un profil intérieur 21 de forme adaptée (conjuguée aux pans de l'écrou ou toute autre forme assurant le blocage en rotation de l'écrou) et un profil extérieur de forme également adaptée pour bloquer sa propre rotation dans le dispositif de sécurité 100.

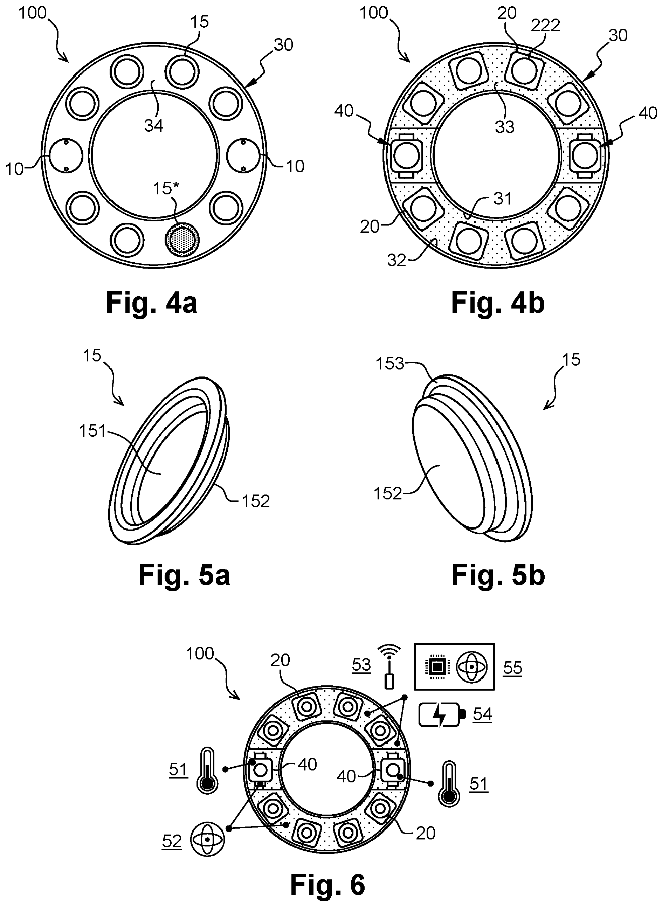

Les figures 4a et 4b représentent le dispositif de sécurité 100 en vue de face et en vue arrière, et permettent de rendre compte du blocage en rotation des moyens de blocage 20 eux-mêmes, notamment à l'aide de leur profil extérieur sensiblement carré qui, lorsqu'il présente des dimensions suffisantes, bute sur les parois internes 31 et 32, circulaires et concentriques du corps principal 30 dudit dispositif. Sur la figure 4b, le dispositif de sécurité 100 est représenté avec les goujons 222 isolés, dont les faces avant sont visibles, sans la jante de la roue ni les plaques de maintien qui permettent d'appuyer les moyens de blocage 20 contre la face arrière 33 dudit dispositif.

Enfin, le dispositif de sécurité 100 se fixe sur la roue avec des moyens de verrouillage mécanique 40.

Bien entendu, les éléments précités du dispositif de sécurité 100 sont décrits plus en détail dans le document EP2605921.

Le premier perfectionnement apporté par la présente invention réside dans le remplacement de tout ou partie des anciens capuchons métalliques 10, dont la fonction est principalement esthétique, par de nouveaux capuchons 15 capables d'indiquer un niveau de température, ci-après désignés par « témoins de surchauffe ».

Les témoins de surchauffe 15 sont fabriqués dans un matériau thermochromique qui change de couleur en fonction de la température (voir le témoin 15* sur la figure 4a). Ainsi, le conducteur peut aisément visualiser les zones de surchauffe sur la roue et procéder à la maintenance nécessaire.

Chaque témoin de surchauffe 15 est au contact d'un élément de fixation de la roue, par exemple la face de l'écrou 221 ou l'extrémité du goujon 222 se trouvant à proximité.

Les figures 5a et 5b représentent un témoin de surchauffe 15 comprenant une face avant 151, visible lorsque le témoin est installé sur le dispositif de sécurité 100, et une face arrière 152, destinée à venir au contact de l'élément de fixation. Au vu de la conception du dispositif de sécurité 100, notamment la présence sur sa face avant 34 de trous débouchant sur les éléments de fixation des roues, les témoins de surchauffe 15 présentent une forme adaptée pour s'emboiter de façon élastique dans lesdits trous, et comportent une corolle annulaire 153 qui vient s'appuyer sur ladite face avant. Cette corolle 153 facilite également le retrait manuel du témoin de surchauffe 15.

De préférence, les témoins de surchauffe 15 présentent une certaine souplesse facilitant leur pose et leur retrait sur le dispositif de sécurité 100.

Les témoins de surchauffe 15 peuvent également fondre sous l'effet de la chaleur, au-delà d'un certain seuil de température.

L'élévation de température que peut subir un élément de fixation de la roue peut, entre autres, être due au desserrage dudit élément. En effet, le desserrage augmente le jeu mécanique et, par là-même, les frottements. De ce fait, les témoins de surchauffe 15 constituent indirectement des indicateurs du desserrage et permettent au conducteur d'identifier un éventuel desserrage, ou toute autre défaillance qui se manifeste par une élévation de la température, par un simple contrôle visuel de la couleur des témoins.

L'élévation de température peut également être due à une dégradation des roulements, un dysfonctionnement du bloc de freinage, un échauffement des pneumatiques, la température ambiante, etc.

Afin d'améliorer la détection d'anomalies dans les roues et donc de renforcer la sécurité du véhicule, la présente invention apporte un deuxième perfectionnement en intégrant des capteurs et des moyens de communication sans-fil au dispositif de sécurité 100 lui permettant d'informer en temps réel le conducteur de l'état des roues de son véhicule.

La figure 6 représente le dispositif de sécurité 100 en y indiquant de manière schématique quelques emplacements possibles pour recevoir différents capteurs et composants électroniques, parmi lesquels des capteurs de température 51, des capteurs de vibration 52, une antenne 53, un dispositif d'alimentation électrique 54 et une carte électronique 55 équipée notamment d'un module de communication sans-fil et d'un ou plusieurs capteurs.

Les capteurs de températures permettent de mesurer la température sur le moyeu et doivent être positionnés au plus près de la source de chaleur pour fournis des mesures précises. De préférence, les capteurs de températures 51 sont positionnés au niveau des deux moyens de verrouillage 40 du dispositif de sécurité 100, où la température est la plus élevée par rapport au chemin de conduction thermique du moyeu vers ledit dispositif.

Les capteurs de température 51 peuvent être avec ou sans contact, de préférence avec contact en raison d'une sensibilité à l'environnement (saleté, poussière, etc.), d'une consommation énergétique et d'un coût, plus faibles.

Compte tenu des températures que peuvent atteindre les surfaces métalliques des moyens de verrouillage 40, les capteurs de température 51 présentent de préférence une plage de mesure comprise entre -40 et 150°C.

Par exemple, les capteurs de températures 51 sont des thermistances particulièrement adaptées à une fixation et intégration facilitées sur le dispositif de sécurité 100.

Le dispositif de sécurité peut en outre comporter des capteurs de température ambiante permettant de calibrer les seuils de déclenchement des alertes en fonction des conditions météorologiques.

Les capteurs de vibration 52 permettent quant à eux de mesurer le mouvement de la pièce sur laquelle ils sont fixés, et ce suivant plusieurs axes, de sorte à permettre une détection d'anomalies mécaniques dues à l'usure des pièces.

Chaque capteur de vibration 52 peut être une unité de mesure inertielle IMU (*Inertial Measurement Unit*) miniature. Une telle unité est généralement constituée d'une association de capteurs, dits proprioceptifs, mesurant directement les mouvements du mobile sur lequel ladite unité est fixée. De tels capteurs sont des accéléromètres et des gyromètres. Pour des raisons de miniaturisation, ces capteurs sont par exemple conçus selon la technologie des microsystèmes électromécaniques (MEMS).

De préférence, chaque capteur de vibration 52 comporte un accéléromètre, un gyromètre et, accessoirement, un magnétomètre.

Chaque capteur de vibration 52 peut être muni d'un calculateur intégré sous forme de microcontrôleur, opérant des intégrations successives des accélérations mesurées pour obtenir les composantes du vecteur vitesse linéaire ainsi que la position. Ainsi, l'analyse de la position par rapport aux différents axes de mesure permet de déduire le niveau de vibration du dispositif de sécurité 100 et donc de la roue sur laquelle ledit dispositif est installé, et de détecter des anomalies grâce à des algorithmes spécifiques calibrés en fonction du véhicule.

De plus, les capteurs de vibration 52 disposent d'une fonction de détection de mouvement (d'activité) permettant leur mise en veille lorsque le véhicule est à l'arrêt pour réduire leur consommation énergétique.

Par exemple, les capteurs de vibration 52 sont des accéléromètres dits 6 axes avec une large plage de fonctionnement programmable (2 g à 32 g sur 16 bits) et une fréquence d'échantillonnage maximale de 6,66kHz.

L'utilisation d'accéléromètres permet, par la mesure de la position, d'identifier chaque roue dans le véhicule pour faciliter l'interaction avec le conducteur.

Les capteurs de température 51 et de vibration 52 sont reliés à la carte électronique 55 qui dispose d'un module de communication sans-fil, par exemple radiofréquence, couplé à l'antenne 53 d'émission/réception qui est correctement placée sur le dispositif de sécurité 100.

De préférence, le module de communication sans-fil émet sur une bande de fréquences ISM (Industriel, scientifique et médical), notamment sur les réseaux LoRa ou Sigfox qui sont particulièrement adaptés aux courtes portées et aux objets connectés de faible consommation.

L'antenne 53 peut ainsi être du type sur circuit imprimé (PCB) conçue pour être flexible et s'adapter à de nombreuses surfaces. En particulier, l'antenne comporte un adhésif pour être fixé au dispositif de sécurité 100.

Le dispositif d'alimentation 54 fournit l'énergie électrique nécessaire au fonctionnement des composants électroniques précités, et peut comprendre un système de récupération d'énergie (solaire, vibratoire, électromécanique, magnétique, etc.) et/ou une batterie telle qu'une batterie lithium-ion.

De préférence, le dispositif d'alimentation 54 comprend une ou plusieurs batteries.

Afin de respecter la plage de température de fonctionnement de la batterie 54, celle-ci est montée isolée thermiquement des parties « chaudes » du dispositif de sécurité 100, par exemple par adjonction d'une couche d'isolation spécifique.

Bien entendu, selon d'autres modes de réalisation, le dispositif de sécurité connecté 100 comporte d'autres capteurs et d'autres servitudes pour améliorer la sécurité globale du véhicule. Par exemple, le dispositif de sécurité 100 peut comporter sur sa face avant un détecteur de mouvement, de préférence par infrarouge, et placé sur une roue à proximité d'une zone sensible (réservoir de carburant) du véhicule pour détecter et signaler la présence très proche d'un individu lorsque le véhicule est garé par exemple. Cela permettrait de sécuriser le véhicule contre les vols et les dégradations de matériel, surtout la nuit lorsque le conducteur est moins vigilant. Le dispositif de sécurité peut également comporter des détecteurs d'angle mort au niveau des roues arrière par exemple.

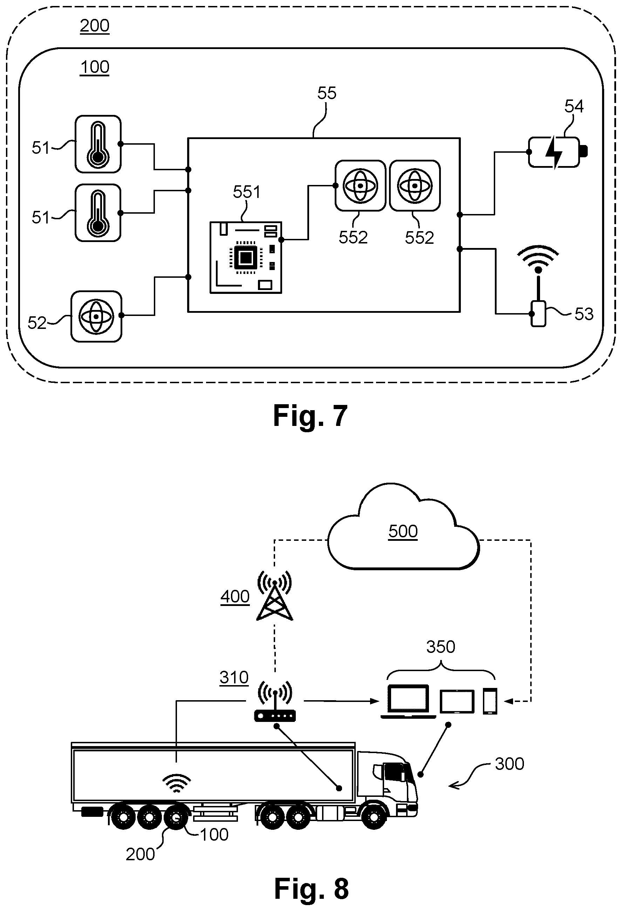

La figure 7 représente un exemple d'architecture électronique dans laquelle le dispositif de sécurité connecté 100 comprend deux capteurs de température 51 du type thermistance, trois accéléromètres dont l'un 52 est relié à la carte électronique principale 55 par un câble et les deux autres 552 intégrés à ladite carte, une antenne 53 et au moins une batterie 54 du type lithium-ion.

La carte électronique principale 55 centralise toutes les servitudes nécessaires au fonctionnement de l'ensembles des capteurs et composants électroniques, telles que les unités de gestion et de contrôle de l'énergie, de transmission des données, de communication sans-fil, etc. En particulier, la carte 55 comprend une unité de traitement et de calcul 551 sous forme de microcontrôleur permettant la fois l'acquisition des données des capteurs et leur transmission sur un réseau sans-fil vers un récepteur situé dans la cabine du véhicule.

Selon l'architecture de la figure 7, les composants électroniques peuvent être positionnés à différents emplacements sur le dispositif de sécurité 100, tant que leurs performances ne s'en trouvent pas fortement diminuées.

Équipé des capteurs et composants électroniques précités, le dispositif de sécurité connecté 100 est capable de sonder l'état de la roue sur laquelle il est fixé et d'en informer le conducteur du véhicule directement ou indirectement en faisant transiter les données par une plateforme numérique de traitement, qui peut être sous forme de cloud, avant qu'elles n'arrivent, dans une forme exploitable, sur un terminal du conducteur. Ainsi, tous les dispositifs de sécurité connectés 100 d'un véhicule peuvent fonctionner dans un système de surveillance plus global.

La figure 8 schématise le principe de fonctionnement du dispositif de sécurité connecté 100 au sein d'un tel système de surveillance, qui comprend un relais 310 placé au niveau du véhicule 300, une antenne réseau 400, une plateforme externe d'analyse et de stockage 500 et différents terminaux 350 et moyens personnels de communication et d'assistance, ces derniers pouvant être fixes et placés dans la cabine du véhicule.

La présence de l'antenne réseau 400 et de la plateforme externe 500 n'est pas obligatoire dans le système de surveillance qui peut être complétement autonome. En effet, les données issues des dispositifs de sécurité 100 peuvent être transmises directement à un terminal 350 placé en cabine, avec ou sans relais 310 en fonction de la connectivité disponible, ledit terminal pouvant ensuite traiter les données reçues de façon autonome avec notamment une capacité de calcul embarquée. Alternativement, pour des raisons de partage des données au sein d'une communauté d'utilisateurs (plateforme collaborative) par exemple, il peut être fait recours à un traitement à distance des données selon le fonctionnement décrit ci-après.

Initialement, les dispositifs de sécurité connectés 100, via leurs différents capteurs, opèrent une acquisition de données sous forme de mesures et de détections de paramètres des roues 200 (température, vibrations, etc.), lesdites données sont ensuite transmises sur la plateforme d'analyse 500 par le biais de l'antenne 400 avant d'être communiquées sous forme brute ou modifiée aux terminaux utilisateur 350.

Lorsque le relais 310 utilise un module de communication sans-fil comprenant une carte d'extension pour un réseau déterminé, l'antenne 400 correspond à une antenne dudit réseau. Par exemple, l'antenne 400 est une antenne radio longue portée associée à un opérateur IoT (Internet des Objets).

Bien entendu, d'autres réseaux de téléphonie mobile peuvent être utilisés dans le cadre de l'invention.

La plateforme 500 comprend principalement un système de stockage de données, un ou plusieurs serveurs informatiques, des moyens de traitement et de calcul implémentant des algorithmes notamment d'intelligence artificielle, et une interface de programmation applicative API (*Application Programming Interface*) permettant de faire le lien entre un programme local et des programmes consommateurs exécutés sur les terminaux utilisateur 350, fixes ou mobiles, tels qu'un ordinateur, une tablette numérique ou un smartphone. La plateforme 500 peut être physique ou, de préférence, virtuelle, auquel cas elle présente une couche de virtualisation regroupant tout ou partie des éléments précités, notamment le système de stockage et les serveurs, de sorte à obtenir une architecture en nuage, communément appelée « cloud » (*cloud computing*), offrant à ladite plateforme une agilité et une capacité de calcul avantageuses.

Ainsi, la plateforme 500 est accessible par l'intermédiaire d'un réseau de type internet et peut être sous forme de logiciel en tant que service SaaS (*Software as a Service*), ou de programme fournisseur accessible via l'API par des programmes consommateurs. De préférence, la plateforme 500 est un SaaS basé web.

Le système de surveillance ainsi décrit, constitué principalement des dispositifs de sécurité connectés 100, d'un terminal cabine 350 et d'une plateforme de traitement embarquée ou sur cloud, permet au conducteur de surveiller l'état de son véhicule en temps réel, de détecter des anomalies et de prévenir des accidents, en mettant en œuvre un procédé de surveillance adapté.

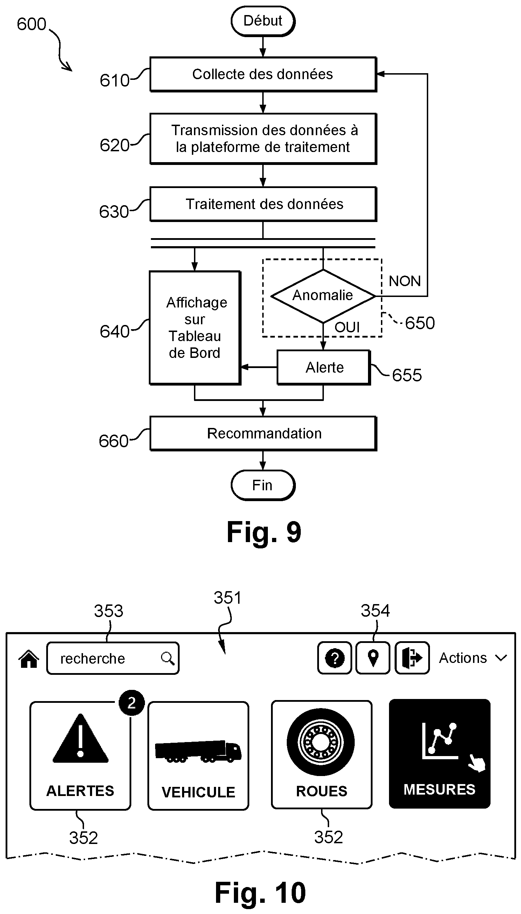

La figure 9 représente les principales étapes d'un tel procédé de surveillance 600, celui-ci comprenant :
- une étape initiale 610 de collecte de données ;
- une étape 620 de transmission des données collectées à une plateforme de traitement ;
- une étape 630 de traitement des données ;
- une étape 640 d'affichage des données traitées via une interface dédiée ;
- une étape conditionnelle 650 de détection d'anomalie ;
- une étape 655 d'alerte en temps réel en cas d'anomalie ;
- une étape 660 de recommandation d'une ou de plusieurs actions adéquates.

L'étape initiale 610 de collecte de données consiste à réunir toutes les données provenant des différents capteurs des dispositifs de sécurité 100. Les mesures des capteurs peuvent être effectuées en continu ou périodiquement pendant une durée déterminée. Le choix peut dépendre de la nature des capteurs, de leur consommation énergétique, de leur criticité dans la sécurité du véhicule, etc.

Bien entendu, certaines données peuvent être collectées en temps différé, à intervalles temporels réguliers ou sur requête du conducteur.

Les données collectées sont ensuite transmises à la plateforme numérique de traitement.

L'étape 620 de transmission des données est de préférence réalisée en temps réel pour un suivi optimal des évolutions des différents paramètres des roues. Cette transmission est nécessairement réalisée sur un canal ou des canaux sécurisés et peut faire appel à des techniques d'encodage ou de cryptage du signal.

L'étape 630 de traitement des données consiste à exécuter une série de calculs et d'analyses en vue de rendre les données collectées exploitables et de permettre au conducteur de prendre les actions nécessaires pour optimiser la maintenance de son véhicule.

Cette étape de traitement est mise en œuvre par des moyens de calcul de la plateforme numérique, implémentant, entre autres, des algorithmes d'intelligence artificielle pour réaliser des analyses prédictives.

Plus spécifiquement, des modèles d'apprentissage automatique permettent de prédire l'occurrence de défaillances telles que le desserrage des écrous, mais également de recommander des actions en se basant sur des historiques de données et d'interventions disponibles pour ledit véhicule ou provenant d'un autre véhicule similaire.

Les résultats des différents traitements sont ensuite affichés sur un tableau de bord lors de l'étape d'affichage 640.

Le tableau de bord est accessible depuis le terminal cabine et permet au conducteur d'accéder à l'information en temps réel.

La figure 10 représente un exemple de page d'accueil d'un tableau de bord 351 accessible depuis une page web par exemple (accès sécurisé à un espace utilisateur).

Le tableau de bord 351 est une interface graphique adaptée à chaque utilisateur et comprend des composants pour faciliter la navigabilité, l'accès à l'information et le suivi.

Globalement, ce tableau de bord comprend les rubriques principales, indiquées par des onglets 352 à pictogrammes par exemple, ici ALERTES, VEHICULE, ROUES et MESURES. Le tableau de bord 351 peut en outre avoir une barre de recherche 353 pour un accès rapide à une donnée spécifique, des boutons complémentaires 354 personnalisables, ainsi que tout autre composant ou outil d'interface simplifiant l'utilisation du tableau de bord.

Ainsi, le tableau de bord permet d'accéder aux différents traitements de données effectués, mais surtout de suivre en temps réel les cas d'alertes et de proposer au conducteur un moyen de communication immédiate pour gérer ces alertes.

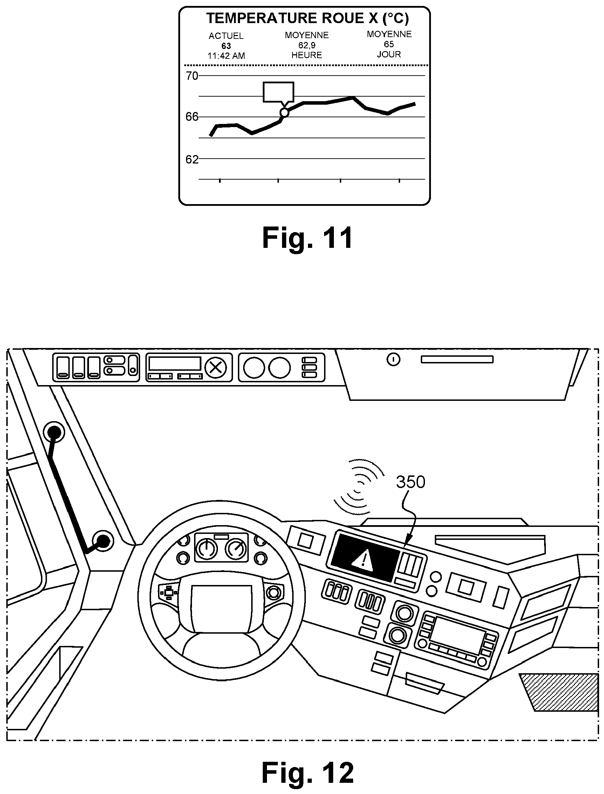

La figure 11 donne un exemple de fenêtre de mesure de la température en temps réel sur une roue donnée du véhicule.

La figure 12 indique un emplacement possible du terminal 350 dans la cabine du véhicule pour qu'il soit à portée immédiate du conducteur. Outre les notifications visuelles des alertes comme représenté sur la figure 12, les alertes peuvent également être sonores pour capter l'attention du conducteur lorsqu'il surveille la route et ne fait pas forcément attention à l'affichage du terminal 350.

Il ressort de la présente description que certains éléments du dispositif de sécurité peuvent être remplacés par des éléments équivalents sans pour autant sortir du cadre de l'invention. Par exemple, le dispositif de sécurité peut être obtenu en intégrant la même électronique (capteurs, communications sans-fil et alimentation) à un enjoliveur traditionnel qui ne dispose pas de moyens de blocage en rotation des éléments de fixation de la roue.

## Revendications

1. Dispositif de sécurité (100) destiné à être monté sur une roue (200) d'un véhicule (300), notamment de transport routier, pour empêcher le desserrage des éléments de fixation (221, 222) reliant la roue à un moyeu, ledit dispositif comportant des moyens de blocage en rotation (20) pour condamner la rotation de tout ou partie desdits éléments de fixation autour de leurs axes respectifs, et des moyens de verrouillage (40) pour se solidariser à ladite roue, **caractérisé en ce qu'**il comporte au moins un capteur physique (51, 52), un module de communication sans-fil couplé à une antenne (53) pour transmettre sur un réseau sans-fil des données issues de chaque capteur physique et un dispositif d'alimentation électrique (54).

2. Dispositif de sécurité selon la revendication 1, comportant au moins un capteur de température (51), pour mesurer la température au niveau des éléments de fixation (221, 222) de la roue (200), et au moins un capteur de vibration (52) pour détecter des anomalies dans le mouvement de ladite roue.

3. Dispositif de sécurité selon la revendication 1 ou 2, comportant une carte électronique principale (55) intégrant le module de communication sans-fil et disposant de moyens de traitement et calcul, sous forme de microcontrôleur, reliés à chaque capteur physique (51, 52), à l'antenne (53) et au dispositif d'alimentation électrique (54).

4. Dispositif de sécurité selon l'une quelconque des revendications précédentes, dans lequel chaque capteur physique (51, 52), le module de communication sans-fil et son antenne (53) ainsi que le dispositif d'alimentation électrique (54) sont placés sur une face arrière dudit dispositif de sécurité pour qu'ils ne soient pas visibles lorsque ce dernier est monté sur la roue (200).

5. Dispositif de sécurité selon l'une quelconque des revendications précédentes, comportant en outre des témoins de surchauffe (15) amovibles destinés à venir au contact des éléments de fixation (221, 222) de la roue (200), lesdits témoins étant fabriqués dans un matériau thermochromique.

6. Système de surveillance de l'état d'une roue (200) d'un véhicule (300), **caractérisé en ce qu'**il comprend, monté sur ladite roue, un dispositif de sécurité (100) selon l'une des revendications 1 à 5, et au moins un terminal (350) fixe ou mobile permettant à un utilisateur, notamment un conducteur du véhicule, d'accéder à des informations transmises par ledit dispositif de sécurité.

7. Système de surveillance selon la revendication 6, comprenant en outre un relais (310) convenablement placé dans le véhicule (300) pour améliorer la connectivité entre le dispositif de sécurité (100) et le terminal (350).

8. Système de surveillance selon la revendication 6 ou 7, comprenant en outre une plateforme numérique (500) de traitement et de calcul, ladite plateforme pouvant être embarquée dans le véhicule (300) ou à distance, notamment sous forme de cloud.

9. Système de surveillance selon l'une quelconque des revendications 6 à 8, dans lequel le dispositif de sécurité (100) et le terminal (350) sont aptes à communiquer sur un réseau sans-fil adapté à l'internet des objets.

10. Véhicule (300) de transport routier, du type poids lourd, **caractérisé en ce qu'**il comprend un système de surveillance selon l'une des revendications 6 à 9, dans lequel chaque roue (200) est équipée d'un dispositif de sécurité (100).
